# EUROPEAN PATENT APPLICATION

(11) **EP 4 134 896 A1**
(43) Date of publication of application: **15.02.2023**
(21) Application number: 21784313.5
(22) Date of filing: 22.02.2021
(51) Int. Cl.: G06Q 30/02

(54) **INFORMATION PROCESSING DEVICE, REVISION ASSISTANCE METHOD, AND REVISION ASSISTANCE PROGRAM**

(30) Priority: 07.04.2020 JP 2020068925
(71) Applicant: DENTSU INC., Tokyo 105-7001 (JP)
(72) Inventor: ARAKAWA, Dai, Tokyo 105-7001 (JP); AKINO, Rina, Tokyo 105-7001 (JP); KAWASE, Tomohiro, Tokyo 105-7001 (JP); KISHIMOTO, Wataru, Tokyo 105-7001 (JP)
(74) Representative: SSM Sandmair
(86) International application number: PCT/JP2021/006537
(87) International publication number: WO 2021/205762

(57) **Abstract**

An information processing apparatus (102) according to one embodiment includes: an output section (211) that outputs display information for displaying discrimination information in association with a broadcast spot in a program guide, the discrimination information discriminating the broadcast spot for broadcasting a commercial associated with an advertisement campaign of a client among a plurality of program spots included in the program guide; and a comparison section (212) that compares a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm, and the output section outputs the display information to display a first program spot in a display format different from display formats of other program spots in the program guide, the first program spot having a rating point that is the second predicted rating point and has increased compared to the first predicted rating point while satisfying a given increase condition.

## Description

### Technical Field

The present invention relates to an information processing apparatus, a plan revision assist method and a plan revision assist program.

### Background Art

For example, a Commercial Message (CM) is broadcast as an advertisement by television broadcasting such as terrestrial broadcasting. The CMs are roughly classified into time CMs and spot CMs. The time CM is, for example, a CM that is broadcast in a spot bought and sold together with a program, and may be a program commercial, a program CM and a sponsored CM.

The spot CM is, for example, a CM that is inserted in a time specified by a television station irrespectively of a program. The spot CM is classified into a Station Break (SB) that is broadcast between programs, and a Participation (PT) (or a participating CM) that is inserted during a program yet does not display a sponsor.

According to a spot CM, for example, a person in charge of planning at a broadcast station, and a person in charge of a television station and a planner at an advertising agency do a planning work of determining a CM broadcast schedule that indicates which CM to broadcast in which time zone, based on an experience. In addition, the person in charge of planning at the broadcast station may be referred to as, for example, a planning desk. Furthermore, the person in charge of the television station at the advertising agency may be referred to as, for example, a person in charge of a station.

Furthermore, there is a known technique that relates to making a work of determining an advertisement schedule efficient (e.g., Patent Literature 1).

### Citation List

### Non-Patent Literature

Patent Literature 1: JP 2019-144634 A

### Summary of Invention

### Technical Problem

However, according to planning, it is requested to change a CM broadcast schedule determined by planning to match circumstances of a broadcast station and a demand of a client who requests an advertisement in some cases. In this case, a time and a labor are required to study which broadcast spot of which CM to delete and which advertisement spot of which program to add as a broadcast spot of a CM, that is, to study a change target program.

Hence, according to one aspect, it is an object of the present invention to provide a technique that can facilitate a CM broadcast schedule changing work.

### Solution to Problem

An information processing apparatus according to one aspect of the present invention includes: an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide; and a comparison section that compares a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm, and the output section outputs the display information to display a first program spot in a display format different from display formats of other program spots in the program guide, the first program spot having a rating point that is the second predicted rating point and has increased compared to the first predicted rating point while satisfying a given increase condition.

Furthermore, an information processing apparatus according to another aspect of the present invention includes: an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide; and a comparison section that compares a first predicted rating point and a second predicted rating point, the first predicted rating point being predicted by using first data for each program spot of the plurality of program spots included in the program guide, and the second predicted rating point being predicted by using second data collected after the first data, and the output section outputs the display information to display a first program spot in a display format different from display formats of other program spots in the program guide, the first program spot having a rating point that is the second predicted rating point and has increased compared to the first predicted rating point while satisfying a given increase condition.

### Advantageous Effects of Invention

According to one aspect, a CM broadcast schedule changing work is facilitated.

### Brief Description of Drawings

Fig. 1 is a diagram illustrating a CM broadcast schedule planning system according to an embodiment.
Fig. 2 is a diagram illustrating a block configuration of a plan revision server according to the embodiment.
Fig. 3 is a diagram illustrating program information according to the embodiment.
Fig. 4 is a diagram illustrating a program guide according to the embodiment.
Fig. 5 is a diagram illustrating advertisement request information according to the embodiment.
Fig. 6 is a diagram illustrating broadcast schedule information according to the embodiment.
Fig. 7 is a diagram illustrating a display screen of the program guide according to the embodiment.
Fig. 8 is a diagram illustrating another display screen of the program guide according to the embodiment.
Fig. 9 is a diagram illustrating a display screen in which a plan revision instruction is registered according to the embodiment.
Fig. 10 is a diagram illustrating the plan revision instruction according to the embodiment.
Fig. 11 is a diagram illustrating plan revision history information according to the embodiment.
Fig. 12 is a diagram illustrating a display screen including a plan revision instruction history according to the embodiment.
Fig. 13 is a diagram illustrating the display screen of the program guide including plan revision instructions based on a past plan revision instruction tendency.
Fig. 14 is a diagram illustrating an operation flow of CM broadcast schedule plan revision assist processing according to the embodiment.
Fig. 15 is a diagram illustrating a display example of the program guide displayed based on display information according to the embodiment.
Fig. 16 is a diagram illustrating a hardware configuration of an information processing apparatus such as a computer for realizing a plan revision server according to the embodiment.

### Description of Embodiments

Some embodiments of the present invention will be described in detail below with reference to drawings. In addition, corresponding components in a plurality of drawings will be assigned the same reference numerals.

For example, an advertising agency accepts from a client a request of an advertisement campaign for broadcasting a spot CM. In addition, the advertisement campaign may share, for example, a given theme in a unit for managing an advertisement. Furthermore, when receiving a request of an advertisement campaign, an advertising agency trades an advertisement spot based on order conditions of the request from a client. Then, the advertising agency tells the order conditions from the client to a broadcast station. The broadcast station collects order conditions of a plurality of clients, determines a broadcast spot for broadcasting a CM per client to satisfy the order conditions of a plurality of these clients, and plans a CM broadcast schedule. Furthermore, the planned CM broadcast schedule of the clients is provided to the advertising agency.

When accepting the CM broadcast schedule of the clients, the advertising agency checks whether or not the broadcast schedule satisfies clients' demands, and notifies the broadcast station of a plan revision instruction taking circumstances of the broadcast station into account if the clients' demands are satisfied.

When accepting the plan revision instruction, the broadcast station revises the CM broadcast schedule of the clients based on the plan revision instruction taking other clients' demands into account, too, and provides the resulting revised plan to the advertising agency again.

According to planning of this CM broadcast schedule, it is necessary to adjust the circumstances of the broadcast station and the clients' demands, and therefore a planning work is hardly finished at one time and plan revision is repeated based on the planned CM broadcast schedule.

Furthermore, the plan revision work needs to study which broadcast spot to delete and which program to add as a broadcast spot from broadcast spots to which broadcast of CMs is allocated in the broadcast schedule, that is, to change broadcast spots, and therefore this study requires a time and a labor. Hence, it is demanded to provide a technique that can facilitate a CM broadcast schedule changing work.

By the way, advertisement spots of spot CMs are generally traded by using a cumulative rating point. The cumulative rating point may include, for example, a rating point that is called a Gross Rating Point (GRP), ALL (P+C7) and a Target Rating Point (TRP).

Furthermore, advertisement spots are traded several months (e.g., approximately two months) before a broadcast day on which CMs are broadcast, and how much a rating point at a time when this program is actually broadcast will become is unknown at a stage of the trade. Hence, the trade is bought and sold based on a predicted rating point. In this regard, the predicted rating point used to estimate a price for the trade is also referred to as an estimated rating point or a first predicted rating point below. Furthermore, a real rating point at a time of broadcast is also referred to as an actual rating point below.

The estimated rating point used for a trade may be, for example, a rating point that is predicted by a first prediction algorithm, and the estimated rating point may be, for example, a rating point that is predicted based on first data. In one example, a predicted rating point that is based on a past broadcast record such as a 4-week average rating point and an 8-week average rating point is used for the estimated rating point. The 4-week average rating point is, for example, an average rating point of the same day of a week and the same time segment of previous 4 weeks except a week corresponding to an order week. In this regard, order weeks are numbers that indicate week positions in one year by counting a week including first Monday of the one year as a first week, and subsequently assigning each week as a second week and a third week.

A client requests an advertisement campaign of a CM by, for example, indicating an order week and an ordered cumulative rating point, and a trade is made by setting a price for the ordered cumulative rating point. Furthermore, according to planning, a broadcast spot of the CM is reserved based on an estimated rating point calculated based on this order week to satisfy the ordered cumulative rating point.

However, an estimated rating point such as a 4-week average rating point used for a trade is just a predicted rating point, and therefore when an actual rating point is measured at a time of actual broadcast, there is a program whose actual rating point goes much below the estimated rating point in some cases. Furthermore, when a CM is broadcast during a program whose actual rating point goes below the estimated rating point in this way, the actual rating point goes much below a cumulative rating point indicated at a time of an order by a client, and it is not possible to provide an advertisement effect expected by the client in some cases.

Hence, in a case where, for example, a program whose actual rating point is estimated to go below a predicted rating point such as an estimated rating point used for a trade is set as a broadcast spot of a CM, it is preferable to cancel broadcast of the CM allocated to this program, and revise a plan for broadcasting the CM in another spot. Furthermore, a program that is newly indicated as a broadcast spot of a CM by plan revision is preferably a program whose actual rating point is estimated to exceed a predicted rating point such as an estimated rating point.

In addition, rating point prediction accuracy can be improved as a broadcast day approaches. In this regard, higher prediction accuracy of a predicted rating point indicates that, for example, it is possible to predict a rating point closer to an actual rating point. When, for example, a broadcast day approaches, detailed information related to a program becomes available, and information related to a weather of the broadcast day and current events near the broadcast day can be obtained, so that it is possible to improve the rating point prediction accuracy by using these pieces of information.

For example, detailed information related to a program such as a program genre, broadcast contents and casts can be provided from a broadcast station when a broadcast day approaches. By correcting a predicted rating point using these pieces of information, it is possible to improve rating point prediction accuracy.

In one example, in a case where description for explaining broadcast contents of a program includes a trend word (also referred to as a trend keyword) or a name of a popular entertainer, the rating point of the program tends to increase. In this regard, the trend word may be a word that indicates, for example, an entertainer or a topic that is currently gaining attention. Hence, in a case where, for example, description for explaining broadcast contents of a program includes a trend word or a name of a given popular entertainer, it is possible to increase rating point prediction accuracy by correcting a predicted rating point of the program upward.

Furthermore, research of, for example, an actual rating point on a sunny day or a rainy day shows that the rating point tends to become higher on the rainy day than on the sunny day. Furthermore, data of a weather forecast on a broadcast day can be used accurately as, for example, the broadcast day approaches. Consequently, by correcting a predicted rating point using the weather forecast, it is possible to improve prediction accuracy of a predicted rating point. In an example, by estimating a precipitation amount pattern on a broadcast day from weather forecast data, and correcting a predicted rating point based on the precipitation amount pattern, it is possible to calculate the predicted rating point that reflects the weather on the broadcast day.

Furthermore, by, for example, performing prediction by using a second prediction algorithm whose prediction accuracy is higher than that of the first prediction algorithm used for prediction of the estimated rating point as described above, it is possible to obtain a predicted rating point whose prediction accuracy is higher than that of the estimated rating point used for a trade. Alternatively, by, for example, performing prediction by using second data obtained after (at a date closer to a broadcast day than) first data used for prediction of the estimated rating point, it is possible to obtain a predicted rating point whose prediction accuracy is higher than the estimated rating point used for a trade. In this regard, the predicted rating point whose prediction accuracy is higher than that of this estimated rating point is also referred to as a second prediction rating point below. In addition, the prediction accuracy of the second predicted rating point for all predicted rating points may not be higher than the prediction accuracy of the first predicted rating point, and, for example, a plurality of programs included in a program guide only need to include a given rate (70 to 90% or more) of programs whose prediction accuracy of the second predicted rating points has been higher than that of the first predicted rating points.

Furthermore, according to the embodiment described below, a program spot whose actual rating point is less likely to decrease from an estimated rating point is specified by using the second predicted rating point whose prediction accuracy is higher than an estimated rating point used for a trade, and display information is output to display this program spot in a display format different from those of other program spots in a program guide. Consequently, by referring to a display screen displayed based on the display information, a person in charge of studying plan revision can easily find a program whose actual rating point is less likely to decrease from the estimated rating point, and easily determine a program that is newly indicated as a broadcast spot of a CM by a revised plan.

Furthermore, according to the embodiment described below, a broadcast spot whose actual rating point is highly likely to decrease from an estimated rating point is specified by using the second predicted rating point from broadcast spots for broadcasting CMs of advertisement campaigns of clients indicated by a broadcast schedule. Furthermore, display information is output to display this specified broadcast spot in a display format different from those of other program spots in a program guide. Consequently, by referring to a display screen displayed based on the display information, a person in charge of studying plan revision can easily find a program whose actual rating point is highly likely to decrease from the estimated rating point, and cancel broadcast of this program.

Consequently, according to the embodiment, a CM broadcast schedule changing work is facilitated. The embodiment will be further described in detail below.

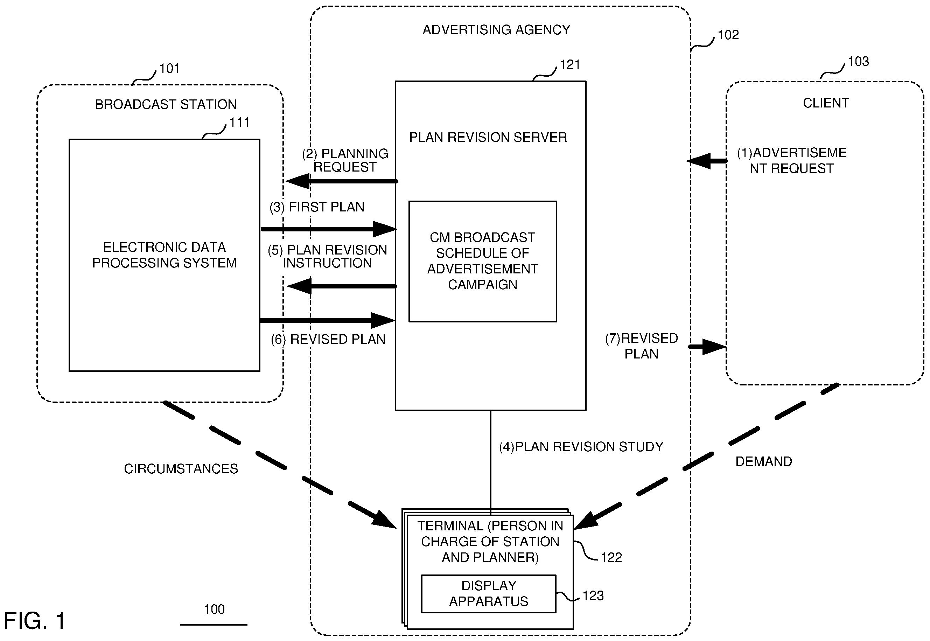

Fig. 1 is a diagram illustrating a plan revision system 100 of a CM broadcast schedule according to the embodiment. The plan revision system 100 includes, for example, a broadcast station 101, an advertising agency 102 and a client 103.

The broadcast station 101 is a business entity or a facility that performs broadcasting. The broadcast station 101 broadcasts, for example, programs and CMs according to a broadcast schedule. The advertising agency 102 accepts an advertisement request from the client 103, and requests broadcast of a CM to the broadcast station 101, and the CM is broadcast in an advertisement spot of a program. The client 103 includes, for example, companies and groups that request advertisements to the advertising agency 102.

The broadcast station 101 includes an electronic data processing system 111 that broadcasts programs and CMs according to a broadcast schedule. The electronic data processing system 111 is, for example, an apparatus that distributes broadcast to a Television (TV), and may include at least one of terrestrial broadcasting, broadcasting by a Broadcasting Satellite (BS)/Communications Satellite (CS) and Internet broadcasting (Internet television). Furthermore, the television may include, for example, multifunctional televisions, smart TVs, Internet Protocol (IP) TVs and set-top boxes.

Furthermore, according to the embodiment, the advertising agency 102 includes a plan revision server 121 that assists a CM broadcast schedule changing work. A flow of plan revision assist that uses the plan revision server 121 will be described below.

For example, the client 103 presents order conditions of an advertisement campaign to the advertising agency 102, and makes an advertisement request for requesting broadcast of a CM ((1) in Fig. 1). In this case, when accepting the advertisement request, the advertising agency 102 tells the order conditions of the requested advertisement campaign to the broadcast station 101, and requests planning of a broadcast schedule for broadcasting a CM of this advertisement campaign ((2) in Fig. 1).

At the broadcast station 101, a person in charge of planning allocates CMs of clients to advertisement spots of programs taking into account order conditions included in planning requests from the various clients 103, and plans the CM broadcast schedule for the advertisement requests of the clients. In addition, this CM broadcast schedule created first for the advertisement requests of the clients will be also referred to as a first plan below.

The created first plan is provided from the electronic data processing system 111 to the plan revision server 121 of the advertising agency 102 via communication such as EDI ((3) in Fig. 1). In this regard, EDI is also referred to as Electronic Data Interchange, and is an electronic commerce mechanism that exchanges various items of trade data such as order placement/acceptance, shipping, billing and payment between companies via a communication line (that may be referred to as online).

After the first plan arrives at the plan revision server 121 of the advertising agency 102, the advertising agency 102 studies plan revision of the first plan of the broadcast schedule. The plan revision server 121 may be connected with at least one terminal 122 via a network such as a Local Area Network (LAN). The terminal 122 may include a display apparatus 123, or may be connected with the display apparatus 123. The display apparatus 123 is, for example, a device such as a display or a projector that displays information.

Furthermore, a user of the terminal 122 connects to the plan revision server 121 via the terminal 122, and causes the display apparatus 123 to display the CM broadcast schedule such as the first plan based on display information received from the plan revision server 121 to study plan revision ((4) in Fig. 1). In this regard, the user of the terminal 122 may include, for example, a person in charge of a station who studies the plan revision from a viewpoint of the broadcast station side, and a planner who studies the plan revision from a viewpoint of a client side, the person in charge of the station and the planner weigh different points for the plan revision, and therefore the plan revision server 121 may do a work of studying the plan revision a plurality of times.

After a plan revision study result is organized, the plan revision server 121 notifies the broadcast station 101 of a plan revision instruction via, for example, a mail ((5) in Fig. 1). The plan revision instruction may include, for example, information of deletion spots that indicate advertisement spots whose broadcast is cancelled in a CM broadcast schedule, and information of addition candidate spots that indicate program spots of addition candidates for which broadcast of CMs is newly desired.

When accepting the notification of the plan revision instruction, the person in charge of planning at the broadcast station 101 edits a first plan and creates a revised plan in consideration of contents of the plan revision instruction, and provides the revised plan from the electronic data processing system 111 to the plan revision server 121 of the advertising agency 102 via communication such as EDI ((6) in Fig. 1).

The advertising agency 102 notifies the client of the revised plan provided to the plan revision server 121 ((7) in Fig. 1). When an event that requires further plan revision such as an event that the client does not agree with the revised plan or an event that a sufficient cumulative rating point cannot be earned for an ordered cumulative rating point as a result of prediction of a rating point turns out subsequently occurs, a plan revision study cycle is repeated, and a final CM broadcast schedule is created.

Furthermore, when, for example, the user of the terminal 122 such as the above-described person in charge of the station or planner studies plan revision, the plan revision server 121 outputs display information for displaying a display screen that assists study of the plan revision to the terminal 122 in the embodiment. Processing of assisting study of plan revision executed by the plan revision server 121 will be further described in detail below.

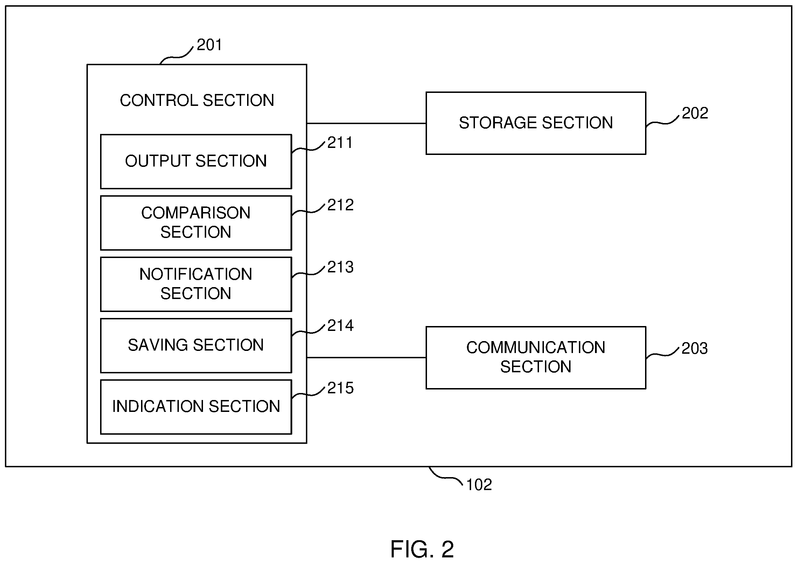

Fig. 2 is a diagram illustrating a block configuration of the plan revision server 121 according to the embodiment. The plan revision server 121 may be, for example, an information processing apparatus such as a computer. The plan revision server 121 includes, for example, a control section 201, a storage section 202 and a communication section 203. The control section 201 controls, for example, the entire plan revision server 121. The control section 201 includes, for example, an output section 211, a comparison section 212, a notification section 213, a saving section 214 and an indication section 215, and may include other function sections. The storage section 202 of the plan revision server 121 stores, for example, information such as program information 300, advertisement request information 500, broadcast schedule information 600 and plan revision history information 110 described later. The communication section 203 communicates with other apparatuses such as the electronic data processing system 111 and the terminal 122 according to an instruction of the control section 201. Details of each of these sections and details of the information stored in the storage section 202 will be described later.

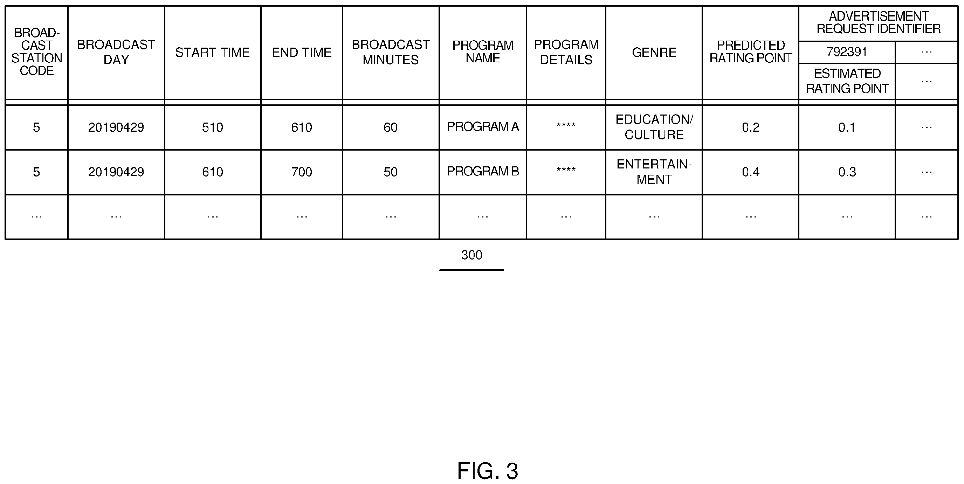

Fig. 3 is a diagram illustrating the program information 300 according to the embodiment. Information of programs in a given period of a broadcast station including target advertisement spots to which broadcast of CMs is allocated is registered in the program information 300. In an example in Fig. 3, records associated with information of a broadcast station code, a broadcast day, a start time, an end time, broadcast minutes, a program name, program details, a genre, a predicted rating point and an estimated rating point of each advertisement request identifier are registered in the program information 300.

The broadcast station code is information for identifying the broadcast station 101. The broadcast day is a date on which a program associated with a record is broadcast. The start time, the end time and the broadcast minutes indicate a broadcast start time, a broadcast end time and broadcast minutes of a program associated with a record. The program name is a name of a program associated with the record. Detailed information about a program associated with a record is registered as the program details. The program details may include, for example, information related to contents such as a topic to be broadcast during a program, and information of cast entertainers. The genre is information that indicates a program genre associated with a record. The program genre may include, for example, news, a variety show, a drama, a movie, music, sports and others. The predicted rating point is a predicted rating point of a program associated with a record. The estimated rating point is a predicted rating point used for a program associated with a record to make an estimate of a trade of an advertisement request identified by the advertisement request identifier. In one example, the estimated rating point may be determined based on an order week indicated by order conditions. The predicted rating point of the program information 300 may be a second predicted rating point whose prediction accuracy is higher than that of the estimated rating point.

Furthermore, the control section 201 can read, for example, information of a program in a given period from the program information 300 in Fig. 3, and generate a program guide. In one example, the control section 201 reads information of programs of one week in a period indicated as targets to which CMs are allocated by advertisement requests from clients, and generate the program guide.

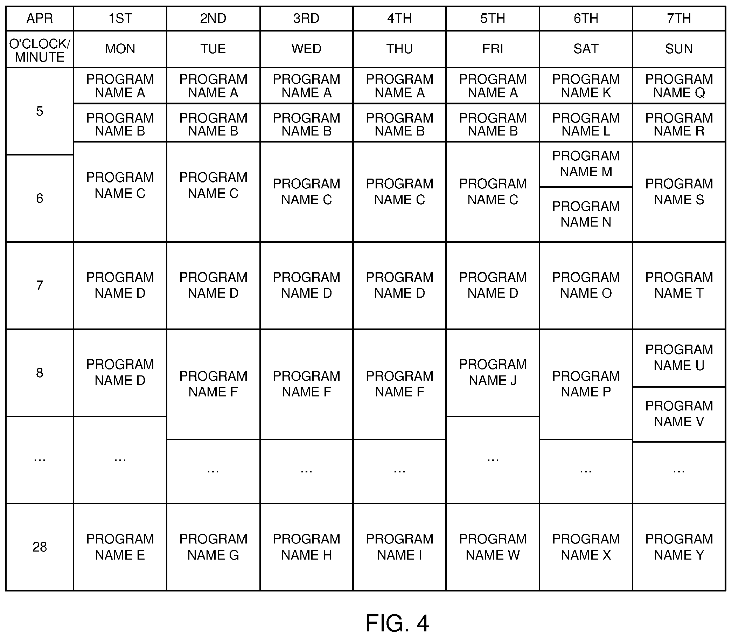

Fig. 4 is a diagram illustrating a program guide according to the embodiment. For example, Fig. 4 illustrates that programs at broadcast times from 5 o'clock in the morning to 29 o'clock at midnight in one week from April 1 to April 7 (Monday to Friday) are divided per program. In this regard, the program may include at least one advertisement spot, yet may not necessarily include an advertisement spot. In the following description, allocation of CMs to a program may mean, for example, allocation of broadcast of CMs to advertisement spots in the program. Furthermore, the broadcast spot may mean, for example, a program spot and an advertisement spot to which broadcast of CMs is allocated. In this regard, the program guide is not limited to the example illustrated in Fig. 4. For example, the program guide may be information of another table format that is formed by integrating a broadcast schedule of programs to be broadcast per broadcast station and broadcast time. Allocation of CMs of advertisement campaigns of clients to program spots in a program guide will be described below.

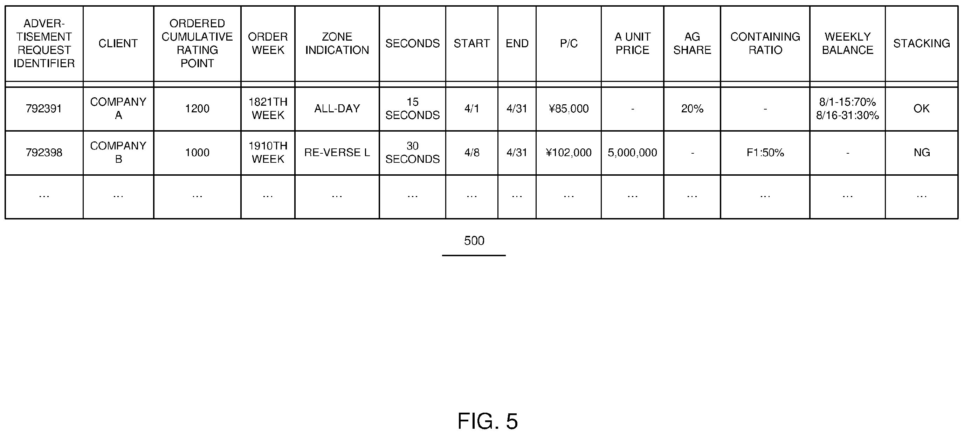

Fig. 5 is a diagram illustrating the advertisement request information 500 according to the embodiment. Records associated with the advertisement requests from the clients 103 are registered in the advertisement request information 500. In an example in Fig. 5, records that associate information of, for example, an advertisement request identifier, a client, an ordered cumulative rating point, zone indication, seconds, start, end, P/C, an A unit price, an AG share, a containing ratio, a weekly balance and stacking are registered in the advertisement request information 500.

The advertisement request identifier is, for example, an identifier for identifying an advertisement request associated with a record. The client is, for example, information that indicates a client who has made an advertisement request associated with a record. The ordered cumulative rating point is, for example, information that indicates a cumulative rating point ordered by an advertisement request associated with a record. In this regard, the cumulative rating point may be expressed by a rating point including, for example, a GRP, an ALL (P+C7) and a TRP. The zone indication is, for example, information that indicates, in a program guide, a zone to broadcast a CM indicated by an advertisement request associated with a record. The zone may include, for example, zones that are called a reverse L type, an all-day type, an inverted E shape type, an inverted C shape type, a reverse F type, a midnight type and an all-day noon type. Alternatively, the zone may be another zone such as a zone arbitrarily indicated by a client in a program guide. The seconds are, for example, seconds of a CM to be broadcast for an advertisement request associated with a record. The start and the end are information that indicates a period that is a target to broadcast a CM for an advertisement request associated with a record, the start is information that indicates a CM broadcast start day, and the end is information that indicates a CM broadcast end day.

The P/C (cost per rating) is, for example, information that indicates a price per 1% of the ordered cumulative rating point indicated by an advertisement request associated with a record. The A unit price is, for example, an A unit price that is indicated by an advertisement request associated with a record. The A unit price is, for example, information that indicates a value obtained by dividing an order money amount by a number of A times. The AG share is, for example, AG share that is indicated by an advertisement request associated with a record. The AG share is, for example, information that indicates a ratio of a cumulative rating point acquired only by the A time with respect to an ordered cumulative rating point. The containing ratio may be, for example, a ratio that indicates a Target Rating Point (TRP)/Gross Rating Point (GRP). In this regard, the containing ratio is also referred to as a containing rate. Furthermore, a target layer of the target rating point may be, for example, a sex/age category (a Child (C) layer, a Teen (T) layer, Male (M) 1 to M3 layers and Female (F) 1 to F3 layers) used in a marketing field, yet is not limited to this. If a program spot of a high target containing ratio can be found, it is possible to make a CM reach more targets even at the same cumulative rating point. The weekly balance may be, for example, information that indicates a cumulative rating point weekly acquired for an ordered cumulative rating point in a period that is a target to broadcast a CM requested by an advertisement request. The stacking is, for example, information that indicates whether or not to permit a CM of a stacking pattern for airing the same CM a plurality of times (e.g., two times) in one program. In this regard, the information registered in the advertisement request information 500 is not limited to these. For example, part of the information indicated in the advertisement request information 500 in Fig. 5 may not be included, and still another information may be included.

When accepting an advertisement request from the client 103, the advertising agency 102 may specify, for example, the above information from information included in the advertisement request, and register the information as the records in the advertisement request information 500. Furthermore, the advertising agency 102 notifies the broadcast station 101 of advertisement request contents. Furthermore, a person in charge of planning at the broadcast station 101 may plan a first plan of a CM broadcast schedule for the client 103 based on the advertisement request contents, and plan a broadcast schedule of a revised plan according to a subsequent plan revision instruction.

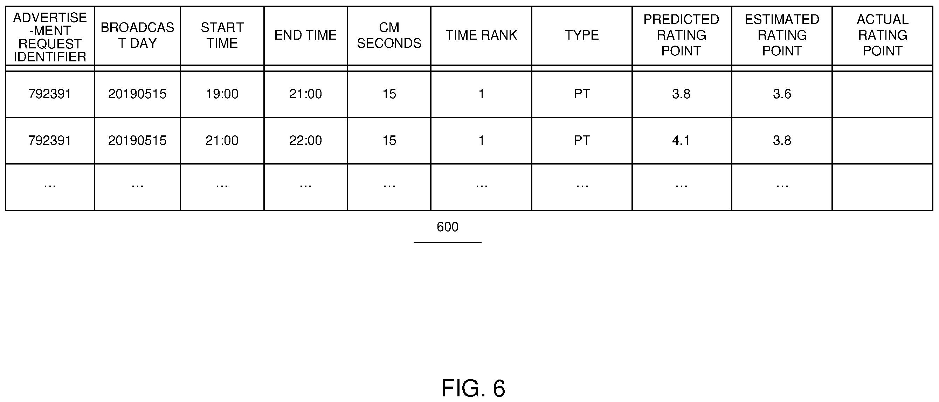

Fig. 6 is a diagram illustrating the broadcast schedule information 600 according to the embodiment. For example, a CM broadcast schedule for clients who have made advertisement requests is registered in the broadcast schedule information 600. In an example in Fig. 6, the broadcast schedule information 600 includes records related to broadcast spots associated with an advertisement request identifier, a broadcast day, a start time, an end time, CM seconds, a time rank, a type, a predicted rating point, an estimated rating point and an actual rating point. The advertisement request identifier is, for example, an identifier for identifying an advertisement request of a CM to be aired in a broadcast spot associated with a record. The advertisement request identifier of the broadcast schedule information 600 may be, for example, information associated with the advertisement request information of the advertisement request information 500. The broadcast day, the start time and the end time are, for example, information that indicates a broadcast day, a start time and an end time during which a program of a broadest spot associated with a record is broadcast. The CM seconds are, for example, information that indicates seconds of a CM to be aired in a broadcast spot associated with a record. In this regard, for example, a CM of 15 seconds or 30 seconds is usually created. The time rank is, for example, information that indicates a time rank of a broadcast spot associated with a record. The time rank is a time segment that is a criteria of a CM fee set per day of a week and time zone by a television station based on, for example, an advertisement effect and a television viewing situation. The type is, for example, information that indicates a type of an advertisement spot for broadcasting a CM in a broadcast spot associated with a record, and may include, for example, an SB and a PT. The predicted rating point is, for example, a predicted rating point of a program in a broadcast spot associated with a record. The estimated rating point is an estimated rating point used for a program in a broadcast spot associated with a record to execute a trade with a client. The actual rating point is, for example, a rating point that is actual and is measured when a program in a broadcast spot associated with a record is broadcast. In this regard, in an example in Fig. 6, a program in a broadcast spot of a record registered in the broadcast schedule information 600 is not yet broadcast, and therefore a value is not registered in the actual rating point. When a CM in a broadcast spot of a record registered in the broadcast schedule information 600 is broadcast, the control section 201 of the plan revision server 121 may register an actual rating point measured at a time of broadcast as the actual rating point.

In addition, the broadcast schedule information 600 in Fig. 6 may be generated based on, for example, a first plan and a revised plan of a CM broadcast schedule created for an advertisement request by a person in charge of planning at the broadcast station 101, and may be stored in the storage section 202.

Furthermore, in the embodiment, the control section 201 of the plan revision server 121 generates display information for displaying a display screen 700 of a program guide in which CMs of clients are allocated to programs based on, for example, the program information 300 and the broadcast schedule information 600.

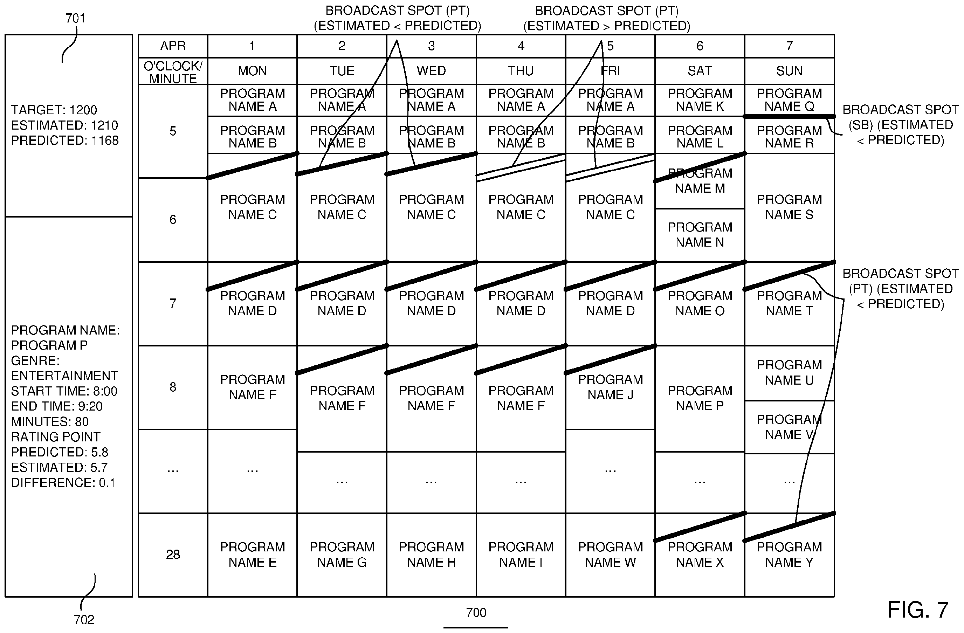

Fig. 7 is a diagram illustrating the display screen 700 of the program guide according to the embodiment. Fig. 7 illustrates line drawing of diagonal lines or horizontal lines as discrimination information for discriminating a program of a broadcast spot in which a CM of a client is allocated to an advertisement spot. In this regard, drawn diagonal lines indicate PTs, and, furthermore, a drawn horizontal line indicates an SB. In this regard, the PT represents a CM that is broadcast during a program, and the SB represents a CM that is broadcast between programs.

Furthermore, in the example in Fig. 7, drawn lines of programs whose predicted rating points exceed estimated rating points are indicated as solid lines, and drawn lines of programs whose estimated rating points exceed predicted rating points are indicated as double lines. In this regard, the predicted rating point may be, for example, the second predicted rating point whose prediction accuracy is higher than that of the estimated rating point. Furthermore, by varying a display format of discrimination information such as line drawing according to a rating point relationship between the estimated rating point and the predicted rating point in this way, the user of the terminal 122 can easily specify a broadcast spot whose estimated rating point can be reserved as an actual rating point, or a broadcast spot whose rating point is expected to decrease from the estimated rating point.

For example, the person in charge of the station and the planner at the advertising agency 102 can easily specify a broadcast spot whose rating point is highly likely to go below the estimated rating point based on line drawing of the indicated double line by referring to the display screen 700. Furthermore, it is possible to study whether or not to cancel broadcast of a CM in a broadcast spot whose specified rating point is highly likely to go below the estimated rating point. Furthermore, the person in charge of the station and the planner at the advertising agency 102 can learn that, for example, it is highly likely that the estimated rating points can be reserved for CM spots drawn by solid lines.

Furthermore, the display screen 700 in Fig. 7 displays information of a target cumulative rating point, an estimated cumulative rating point and a predicted cumulative rating point in a display field 701. The target cumulative rating point may be an ordered cumulative rating point indicated by an advertisement request, and is displayed as a fixed value indicated by the advertisement request. Furthermore, the estimated cumulative rating point is, for example, a value obtained by cumulating an estimated rating point of each broadcast spot indicated in the program guide of the display screen 700. The predicted cumulative rating point is, for example, a value obtained by cumulating the second predicted rating point that is calculated with higher prediction accuracy than that of the estimated rating point for each broadcast spot indicated in the program guide of the display screen 700.

Furthermore, when, for example, the user of the terminal 122 selects a program in the program guide displayed on the display screen 700 using an input apparatus such as a touch panel, a display field 702 in Fig. 7 may display information of the selected program. For example, the display field 702 in Fig. 7 indicates a genre, a broadcast time, broadcast minutes, a predicted rating point, an estimated rating point and a difference between these rating points of a program P as information of a selected program name: the program P and rating points.

Hence, when selecting a deletion spot for canceling broadcast of a CM from broadcast spots, or selecting an addition candidate spot for which broadcast of a CM is newly requested, the user of the terminal 122 can use the information displayed in the display field 701 and the display field 702.

Furthermore, according to the embodiment, the control section 201 may display a program spot in a different display format according to a rating point difference between an estimated rating point and a predicted rating point.

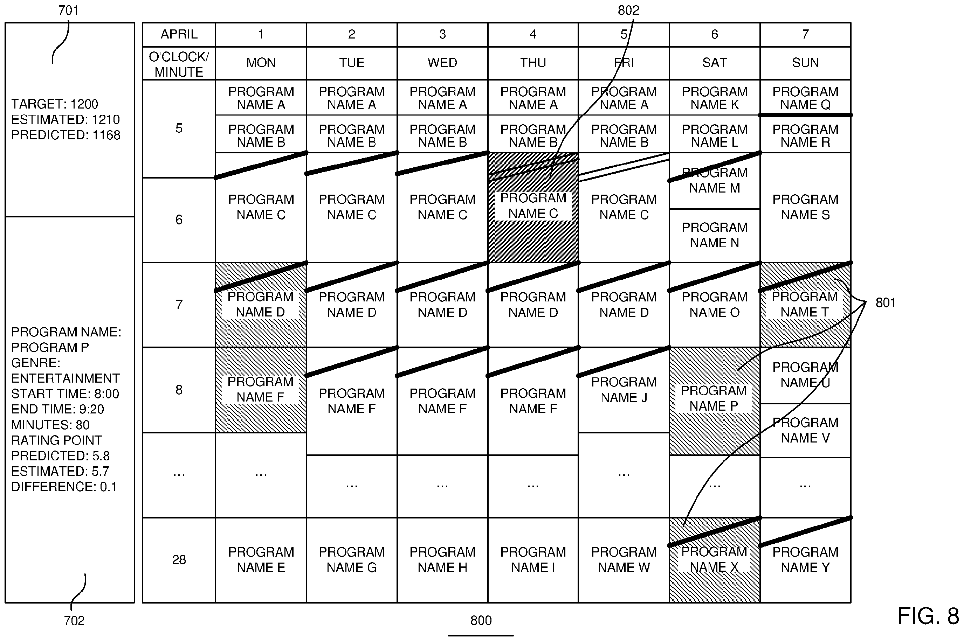

Fig. 8 is a diagram illustrating another display screen 800 of a program guide according to the embodiment. In an example in Fig. 8, a program spot whose predicted rating point has increased compared to an estimated rating point (e.g., whose predicted rating point is 0.5% or more larger than the estimated rating point) while satisfying a given increase condition is displayed in a different display format such as a first hatching pattern 801. Consequently, the user of the terminal 122 such as the person in charge of the station or the planner can specify a safe program spot that is highly likely to be able to achieve the estimated rating point by referring to the display screen 800.

Furthermore, in the example in Fig. 8, a broadcast spot whose predicted rating point has decreased compared to the estimated rating point while satisfying a given decrease condition among broadcast spots to which broadcast of CMs is allocated is displayed in a different display format such as a second hatching pattern 802. In this regard, the given decrease condition may be, for example, that a rating point decreases over a given value. The given value can be arbitrarily set, may be, for example, a value in a range of 0.01% to 3.0%, and may be 0.5% in one example. Consequently, the user of the terminal 122 such as the person in charge of the station or the planner can specify a program that is less likely to be able to achieve the estimated rating point by referring to the display screen 800. When CMs are broadcast as they are in these broadcast spots, it is highly concerned that actual rating points decrease compared to estimated rating points used for trades, and it is preferable to exclude the CMs from the broadcast spots. Furthermore, by varying a display format in this way, the user can easily specify a program that is preferably excluded from broadcast spots.

Consequently, the display screen 800 according to the embodiment makes it easy for the user of the terminal 122 to study a revised plan of a CM broadcast schedule. Furthermore, the user of the terminal 122 may specify a program spot to be revised in consideration of, for example, use of different display of a display format of a program displayed on the display screen 800, and register a plan revision instruction in the program guide.

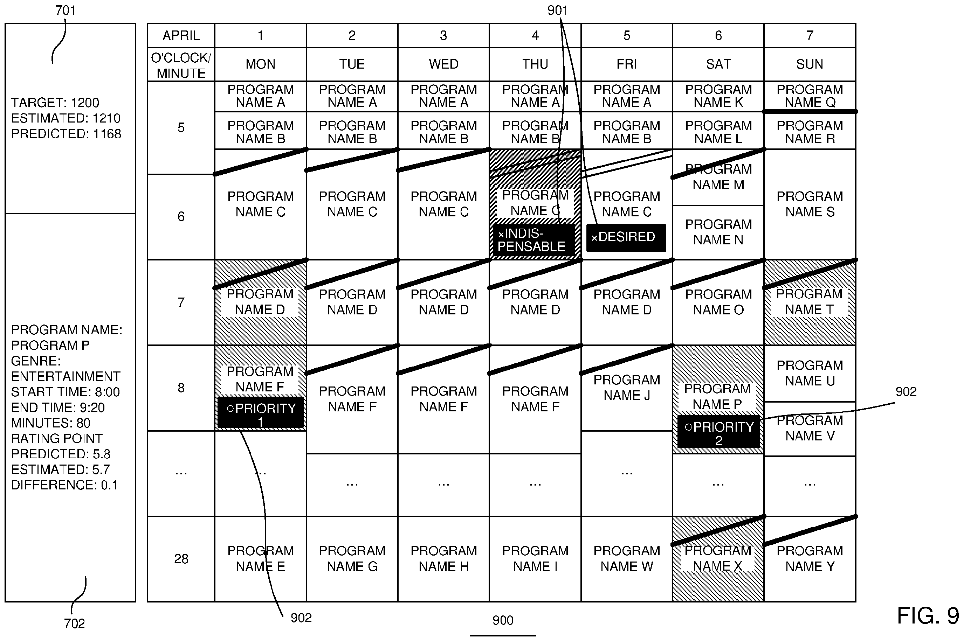

Fig. 9 is a diagram illustrating a display screen 900 in which a plan revision instruction is registered according to the embodiment. For example, the plan revision instruction of deletion spots 901 for canceling broadcast of CMs is registered in a program guide in the display screen 900 in Fig. 9. The deletion spot 901 may include, for example, additional information that indicates a degree of necessity of plan revision such as information that indicates that deletion is indispensable or information that indicates that deletion is desired if possible. In this regard, the additional information may be other information such as a stamp and a comment arbitrarily set by a user.

Furthermore, for example, the plan revision instruction of addition candidate spots 902 that are candidates to newly broadcast CMs is registered in the program guide in the display screen 900 in Fig. 9. The addition candidate spot 902 may include, for example, additional information that indicates a wish for the addition candidate spot such as information that indicates a priority.

In this regard, the user of the terminal 122 may register the plan revision instruction in the program guide by the plan revision server 121 by, for example, transmitting a registration instruction for registering programs of the program guide as deletion spots and addition candidate spots from the terminal 122 to the plan revision server 121.

Subsequently, the control section 201 of the plan revision server 121 notifies the broadcast station 101 of the plan revision instruction registered in the program guide. For example, the user of the terminal 122 may cause the terminal 122 to transmit a plan revision instruction notification instruction to the plan revision server 121. By this means, the plan revision server 121 may notify the broadcast station 101 of the plan revision instruction. In addition, in one example, the control section 201 of the plan revision server 121 may transmit a mail including the plan revision instruction to a mail address of the person in charge of planning at the broadcast station 101. Furthermore, according to another embodiment, the control section 201 of the plan revision server 121 may transmit the plan revision instruction to the electronic data processing system 111.

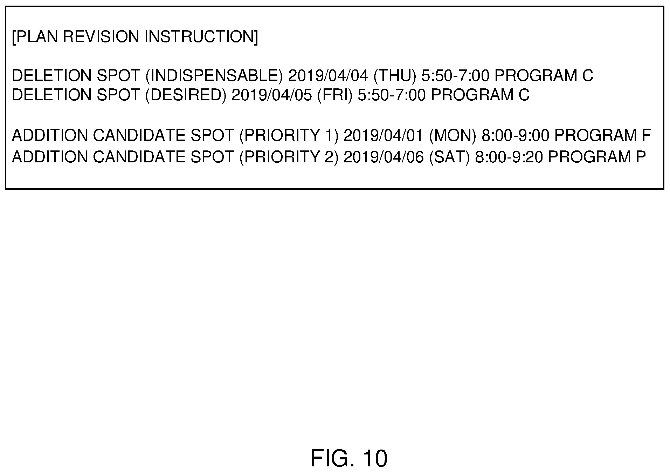

Fig. 10 is a diagram illustrating a plan revision instruction according to the embodiment. As illustrated in Fig. 10, the plan revision instruction may include, for example, information that indicates programs of deletion spots, and information that indicates programs of addition candidate spots. Consequently, the person in charge of planning at the broadcast station 101 can study plan revision in consideration of, for example, the notified plan revision instruction. In addition, the control section 201 of the plan revision server 121 may record a history of contents notified by the plan revision instruction in the plan revision history information 1100 of the storage section 202.

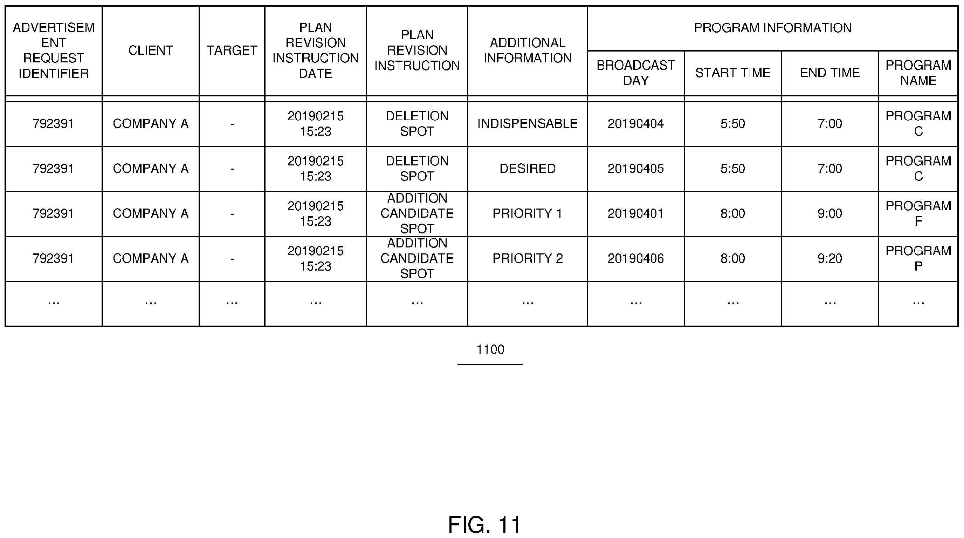

Fig. 11 is a diagram illustrating the plan revision history information 1100 according to the embodiment. For example, records that associate an advertisement request identifier, a client, a target, a plan revision instruction date, a plan revision instruction, additional information and program information are registered in the plan revision history information 1100. The advertisement request identifier is, for example, information that identifies an advertisement request for which a plan revision instruction associated with a record is made. The advertisement request identifier may correspond to, for example, the advertisement request identifiers of the advertisement request information 500 and the broadcast schedule information 600. The client is, for example, information that indicates a client of an advertisement request for which a plan revision instruction associated with a record is made. The target is information that indicates a target of an advertisement request for which a plan revision instruction associated with a record is made. In a case where, for example, a target layer is registered in the containing ratio in the advertisement request information 500, information of this target layer may be registered in the target. The plan revision instruction date is, for example, information that indicates a date on which a plan revision instruction associated with a record is made. For example, contents of a plan revision instruction associated with a record, and additional information added in this plan revision instruction may be registered as the plan revision instruction and the additional information. The program information is, for example, information that indicates a program indicated by a plan revision instruction, and may include a broadcast day, a start time, an end time and a program name of this program.

Furthermore, the control section 201 of the plan revision server 121 according to the embodiment may generate and output display information for displaying a display screen 1200 including a history of a plan revision instruction by using the plan revision history information 1100. In this regard, the output display information may be notified to, for example, the terminal 122, and the display screen 1200 may be displayed on the display apparatus 123 based on the display information.

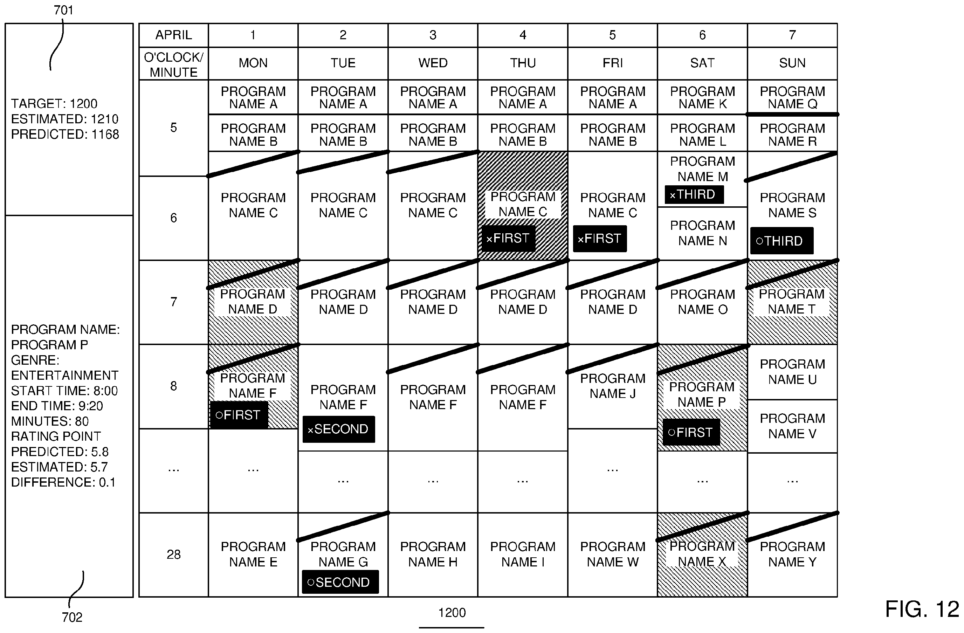

Fig. 12 is a diagram illustrating the display screen 120 including a history of a plan revision instruction according to the embodiment. Fig. 12 illustrates information of a deletion spot and an addition candidate spot for three plan revision instructions from a first plan revision instruction to a third plan revision instruction. The control section 201 may extract, for example, a record whose advertisement request identifier matches in the plan revision history information 1100, specify the number of editions of the plan revision instruction based on the plan revision instruction date, generate the display information of the display screen 1200 including the history, and cause the display apparatus 123 of the terminal 122 to display the display information.

Furthermore, by, for example, referring to the display screen 1200 including the history, the user of the terminal 122 can learn under what circumstances plan revision has been previously performed.

Furthermore, the plan revision history information 1100 can be also used to grasp a client's preference. For example, some clients do not prefer that CMs are broadcast in a program spot arranged at a specific program position in a program guide. In this case, when, for example, a program spot that the client 103 does not prefer in a broadcast schedule sent from the broadcast station 101 is a broadcast spot of a CM, a plan revision instruction to indicate this broadcast spot as a deletion spot is made in response to a demand from the client 103. Furthermore, plan revision instructions of deletion spots for program spots arranged at specific program positions in a program guide are accumulated in the plan revision history information 1100.

Furthermore, for example, some clients prefer that CMs are broadcast in a program spot arranged at a specific program position in a program guide. In this case, in a case where, for example, broadcast of a CM is not set to a program spot that the client 103 prefers in a broadcast schedule sent from the broadcast station 101, a plan revision instruction to indicate this program spot as an addition candidate spot for broadcasting a CM is made in response to a demand from the client 103. Furthermore, plan revision instructions of additional candidate spots for program spots arranged at specific program positions in a program guide are accumulated in the plan revision history information 1100.

Consequently, by adding up information of the records registered in the plan revision history information 1100, it is possible to set a plan revision instruction matching a client's preference.

For example, as a result of adding up the records registered in the plan revision history information 1100 per client, plan revision instructions of deletion spots are made highly frequently (e.g., a given number of times or more in a given period) while satisfying a given condition at a specific program position in a program guide such as a program spot broadcast in a specific time zone on a specific day of a week. In this case, this program position in the program guide can be regarded as a program position that a client does not prefer. Hence, in a case where a program spot arranged at this program position is indicated as a broadcast spot in a CM broadcast schedule of the client, the control section 201 may set a plan revision instruction that indicates this program spot as a deletion spot.

For example, as a result of adding up the records registered in the plan revision history information 1100 per client, plan revision instructions of addition candidate spots are made highly frequently (e.g., a given number of times or more in a given period) while satisfying a given condition at a specific program position in a program guide such as a program spot broadcast in a specific time zone on a specific day of a week. In this case, this program position in the program guide can be regarded as a program position that a client prefers. Hence, in a case where a program spot arranged at this program position is not indicated as a broadcast spot in a CM broadcast schedule of the client, the control section 201 may set a plan revision instruction that indicates this program spot as an addition candidate spot.

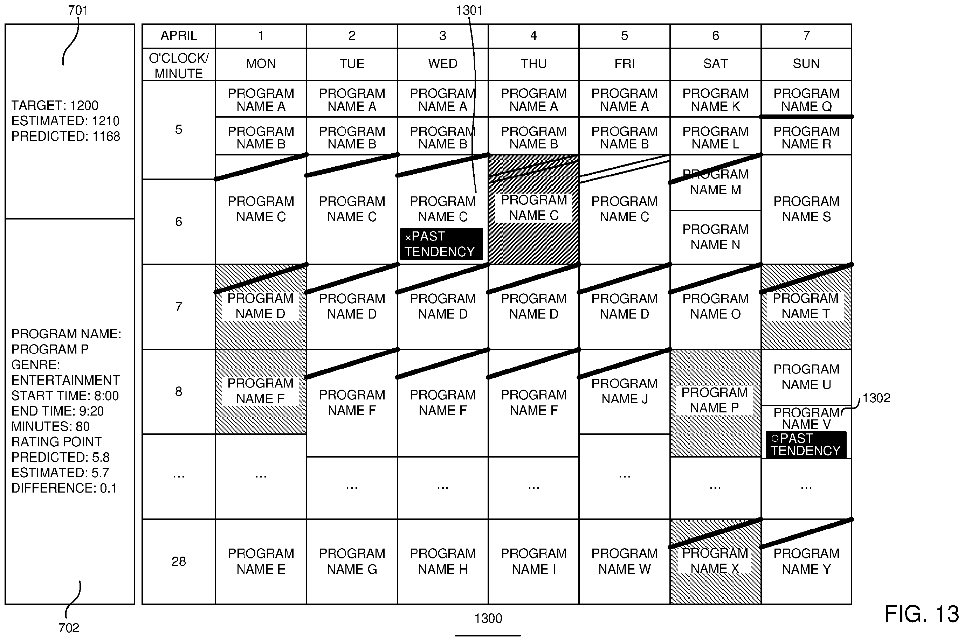

Fig. 13 is a diagram illustrating a display screen 1300 of a program guide including a plan revision instruction based on a past plan revision instruction tendency. In an example in Fig. 13, a plan revision instruction of a deletion spot is set to a program spot 1301 arranged at a program position whose frequency to be previously indicated as a deletion spot has been high while satisfying a given condition in the plan revision history information 1100.

Furthermore, in the example in Fig. 13, a plan revision instruction of an addition candidate spot is set to a program spot 1302 arranged at a program position whose frequency to be previously indicated as an addition candidate spot has been high while satisfying a given condition in the plan revision history information 1100. In this regard, these plan revision instructions include additional information (e.g., an indication of the "past tendency" in Fig. 13), too, that indicates the plan revision instructions set based on a past tendency.

As described above, according to the embodiment, it is possible to set a plan revision instruction based on a history of the past plan revision instructions registered in the plan revision history information 1100. Furthermore, by referring to a program guide displayed on the display screen 1300, the user of the terminal 122 can learn that it is probably better to revise a plan of the program spot 1301 and the program spot 1302 based on the past tendency. In this regard, although the above example has described an example where a plan revision instruction is set based on the past tendency, the embodiment is not limited to this. According to another embodiment, the control section 201 may set the program guide of the display screen 1300 to display recommend information that recommends making a plan revision instruction of deletion spots and addition candidate spots instead of setting a plan revision instruction of deletion spots and addition candidate spots.

Still furthermore, according to the another embodiment, the plan revision history information 1100 may include plan revision success/failure information that indicates whether or not a plan revision instruction associated with a record has been executed. Furthermore, in a case where, for example, a program position for which a plan revision instruction is highly frequently made previously is specified based on the plan revision history information 1100, the control section 201 may calculate for the plan revision instruction of this program position a success rate of plan revision from the plan revision success/failure information. Furthermore, in a case where the success rate of plan revision is low, the control section 201 may include information that indicates that the success rate of the plan revision is low in settings of the plan revision instruction to a program at this program position, or cancel the setting of the plan revision instruction to the program at this program position.

It is assumed as one example that a certain client specifies a program position whose frequency to be indicated as an addition candidate spot from the plan revision history information 1100 is high while satisfying a given condition. In this case, the control section 201 adds up plan revision succeed/failure information for the plan revision instruction of the addition candidate spot of the client at this program position, and obtains a success rate of the plan revision instruction. Furthermore, in a case where the success rate of the plan revision instruction goes below an arbitrary given threshold such as 30% or less, and is low, the control section 201 may cancel settings of the plan revision instruction of the addition candidate spot to the program spot arranged at this program position.

Furthermore, in a case where a plurality of program positions whose frequency to be indicated as addition candidate spots is high while satisfying a given condition are specified for a certain client, processing of narrowing down the program positions to which a plan revision instruction is set based on a success rate of the plan revision instruction from a plurality of program positions may be executed. For example, the control section 201 may execute processing of narrowing down program positions whose success rates are a given value or more, or narrowing down a given number of program positions of higher success rates.

As described above, according to the embodiment, it is possible to easily study plan revision of a CM broadcast schedule. An example of an operation flow of plan revision assist of a CM broadcast schedule described in the above embodiment will be further described below.

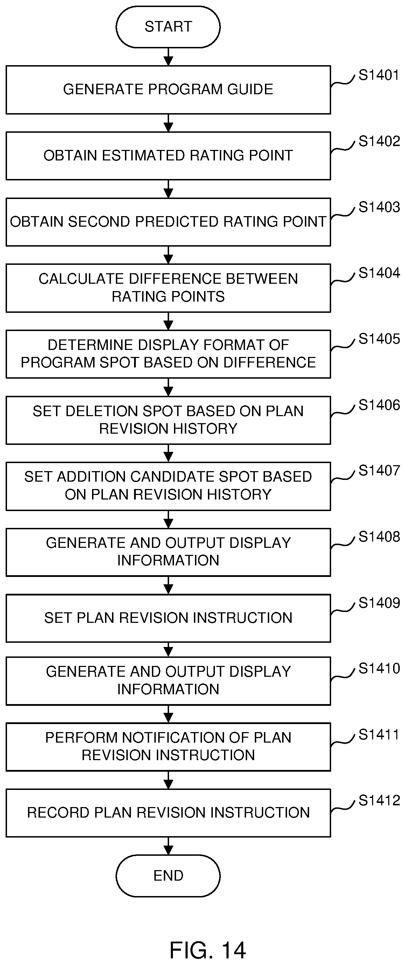

Fig. 14 is a diagram illustrating the operation flow of the plan revision assist processing of a CM broadcast schedule according to the embodiment. When, for example, a plan revision assist processing execution instruction is input from the terminal 122 together with an indication of an advertisement request identifier or a period of a plan revision target advertisement request, the control section 201 of the plan revision server 121 may start the operation flow in Fig. 14.

The control section 201 of the plan revision server 121 in step S1401 (hereinafter, a step is described as "S" such as S1401 below) generates a program guide of an indicated period associated with the advertisement request identified based on the indicated advertisement request identifier. For example, the control section 201 may read information of a program of the indicated period from the program information 300, and generate the program guide illustrated in Fig. 4.

In S1402, the control section 201 obtains an estimated rating point (first predicted rating point) associated with the advertisement request identified based on the indicated advertisement request identifier. For example, the control section 201 may obtain the estimated rating point based on the advertisement request identifier from the program information 300, or specify an order week associated with the advertisement request identifier from the advertisement request information 500, and calculate the estimated rating point in another embodiment.

In S1403, the control section 201 obtains the second predicted rating point. For example, the control section 201 may predict a rating point of each program in the program guide according to a given algorithm, and obtain the second predicted rating point. In this regard, prediction accuracy of the second predicted rating point may be prediction accuracy higher than that of the estimated rating point. In one example, the control section 201 may obtain the second predicted rating point whose prediction accuracy is higher than that of the estimated rating point by using information such as a weather forecast on a broadcast day or broadcast contents of a program.

In S1404, the control section 201 compares the estimated rating point and the second predicted rating point, and calculates a difference between the estimated rating point and the second predicted rating point.

Furthermore, in S1405, the control section 201 determines a display format of a program spot of the program guide based on the difference.

For example, the control section 201 may determine a display format to display discrimination information for discriminating a broadcast spot, in a broadcast spot for broadcasting a CM associated with an advertisement campaign of a client among a plurality of program spots included in the program guide. Fig. 7 illustrates the display format of the program guide in this case, and the drawn lines are displayed as the discrimination information in the broadcast spots.

Furthermore, during processing in S1405, the control section 201 may determine the display format such that the discrimination information whose rating point is the second predicted rating point and has decreased compared to the estimated rating point while satisfying a given decrease condition among broadcast spots is displayed in the display format different from that of discrimination information of other broadcast spots. Fig. 7 illustrates the display format of the program guide in this case, and the drawn lines of the program spots whose second predicted rating point is lower than the estimated rating point are displayed as the double lines such that the broadcast spots are different from the other broadcast spots.

Furthermore, during the processing in step S1405, the control section 201 may determine the display format such that the program spot whose rating point is the second predicted rating point and has increased compared to the estimated rating point while satisfying a given increase condition in the program guide is displayed in the display format different from those of the other broadcast spots.

Furthermore, during the processing in step S1405, the control section 201 may determine the display format of the program spot whose rating point is the second predicted rating point and has decreased compared to the estimated rating point while satisfying the given decrease condition such that the display format is varied according to the rating point difference between the estimated rating point and the second predicted rating point.

Fig. 8 illustrates the display screen 800 that is displayed in a case where the display format of the program guide is determined as described above by the processing in S1405. In, for example, Fig. 8, the display format is determined such that the program spot whose second predicted rating point is 0.5% or more higher than the estimated rating point is displayed according to the first hatching pattern 801. Furthermore, in Fig. 8, the display format is determined such that the broadcast spot whose rating point is the second predicted rating and has decreased 0.5% or more compared to the estimated rating point among program spots is displayed according to the second hatching pattern 802 unlike the broadcast spot whose decrease in the rating point is less than 0.5%.

In addition, the control section 201 may determine a display format such that the program spot whose rating point is the second rating point and has increased compared to the estimated rating point is varied according to a degree of the rating point difference between the estimated rating point and the second predicted rating point. That is, for example, the control section 201 may determine the display format such that the program spot whose second rating point is 1.0% or more higher than the estimated rating point is displayed according to still another hatching pattern.

Subsequently, in S1406, the control section 201 sets deletion spots based on a plan revision history. In a case where, for example, there are program positions that are highly frequently indicated as the deletion spots while satisfying the given condition in the plan revision history information 1100, and these program positions are set to broadcast spots for broadcasting CMs in the program guide, the control section 201 may indicate the broadcast spots as the deletion spots. In addition, instead of indicating the broadcast spots as the deletion spots as described above, the control section 201 may set the program guide to display recommend information that recommends indicating the broadcast spots as the deletion spots.

In S1407, the control section 201 sets addition candidate spots based on the plan revision history. In a case where, for example, there are program positions that are highly frequently indicated as the addition candidate spots while satisfying the given condition in the plan revision history information 1100, and these program positions are not set to broadcast spots in the program guide, the control section 201 may indicate the broadcast spots as the addition candidate spots. In addition, instead of indicating the broadcast spots as the addition candidate spots as described above, the control section 201 may set the program guide to display recommend information that recommends indicating the broadcast spots as the addition candidate spots.

In S1408, the control section 201 generates display information for displaying the display screen whose display format is set by the above processing, and outputs the display information to the terminal 122. When receiving the display information, the terminal 122 may causes the display apparatus 123 to display the display screen such as the display screen 1300 illustrated in Fig. 13 based on the received display information.

Subsequently, in S1409, the control section 201 indicates the deletion spots and the addition candidate spots, and sets a plan revision instruction. For example, the user of the terminal 122 studies plan revision looking at the display screen 1300, and may transmit a registration instruction for registering the deletion spots and the addition candidate spots from the terminal 122 to the plan revision server 121. Furthermore, the control section 201 of the plan revision server 121 may set to the program guide the plan revision instruction that indicates the deletion spots and the addition candidate spots according to the registration instruction.

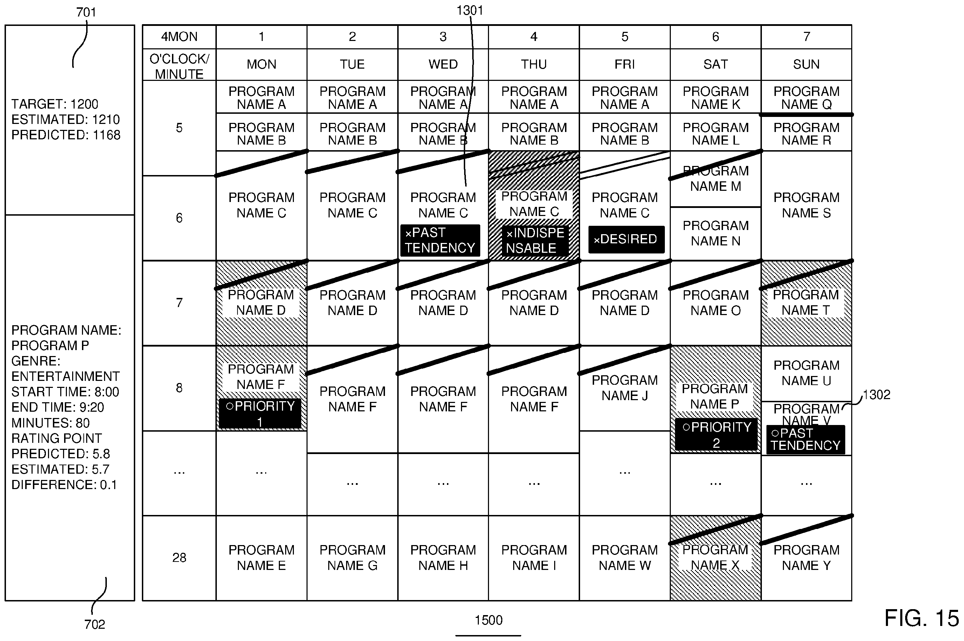

In S1410, the control section 201 generates display information that reflects information of the deletion spots and the addition candidate spots indicated by the registration instruction from the terminal 122, and outputs the display information to the terminal 122. By this means, the display apparatus 123 of the terminal 122 may display the display screen such as the display screen 1500 illustrated in Fig. 15. Fig. 15 additionally illustrates a plan revision instruction of deletion spots and addition candidate spots indicated by the user. In addition, processing in S1409 and S1410 is repeatedly executed every time the user sets a plan revision instruction.

Subsequently, in S1411, when, for example, receiving a plan revision instruction notification instruction from the terminal 122, the control section 201 performs notification of the plan revision instruction including the information of the deletion spots and the addition candidate spots. For example, the control section 201 may transmit the plan revision instruction by using a mail to a terminal used by the person in charge of planning at the broadcast station 101, or notify the electronic data processing system 111 of the plan revision instruction in the another embodiment.

In S1412, the control section 201 registers contents of the plan revision instruction in the plan revision history information 1100, and this operation flow ends. For example, the control section 201 may register, in the plan revision history information 1100, records that associate the information of the deletion spots and the addition candidate spots indicated by the plan revision instruction with clients who have made advertisement requests or the clients of the advertisement requests and targets of the clients.

According to the above-described operation flow in Fig. 14, the user of the terminal 122 can easily set and perform notification of the plan revision instruction by, for example, referring to the display screen such as the display screen 1500 in Fig. 15. For example, the user can specify a safe program spot that is highly likely to be able to achieve the estimated rating point, or a program spot that is highly likely to go below the estimated rating point according to a difference in a display format of the program spot. Furthermore, the user can also accept presentation of the addition candidate spots or the deletion spots.

Furthermore, currently, a work of checking a CM broadcast scheduling or making a plan revision instruction is generally performed in a form of writing the CM broadcast scheduling or the plan revision instruction on paper. In this case, the paper is lost or a written instruction is misread, which causes mistakes. However, according to the above-described embodiment, it is possible to digitally manage information of the CM broadcast schedule, and display, for example, the display screen 1500, so that it is possible to suppress occurrence of these mistakes while reserving listview quality similar to that of the paper. Furthermore, according to the embodiment, it is also possible to capture and use a screen shot, and check a plan revision history. Furthermore, according to the embodiment, it is also possible to indicate a plurality of addition candidate spots to be added instead in response to deletion of one advertisement spot, and easily add information that indicates the degree of necessity of plan revision and additional information such as other comments or stamps. Hence, according to the embodiment, the CM broadcast schedule changing work is facilitated.

In addition, although the example where the user of the terminal 122 indicates the deletion spots and the addition candidate spots, and sets the plan revision instruction during the processing in S1409 has been described with reference to the operation flow in Fig. 14, the embodiment is not limited to this. For example, according to another embodiment, the control section 201 of the plan revision server 121 may indicate as a deletion spot a broadcast spot whose rating point is the second predicted rating point and has decreased compared to the estimated rating point while satisfying the given second decrease condition, that is, may automatically indicate program spots of a great difference as deletion spots and addition candidate spots, and set a plan revision instruction.

Furthermore, the above-described processing in S1405 determines the display format of the program spot based on the difference, and determines the display format such that, for example, the program spot whose rating point is the second predicted rating point and has increased compared to the estimated rating point while satisfying the given increase condition in the program guide is displayed in a display format different from those of the other program spots. Consequently, when studying plan revision of the CM broadcast schedule, the user can learn a safe program spot whose actual rating point is highly likely to increase compared to the estimated rating point due to a difference in the display format, and easily select addition candidate spots that are candidates for newly broadcasting CMs. However, the embodiment is not limited to this. For example, according to the another embodiment, the control section 201 may further extract program spots that are preferable to select as addition candidate spots based on order conditions of an advertisement request from safe program spots whose rating points do not decrease from estimated rating points, and determine display formats of the program spots such that the program spots are displayed in the different formats different from those of the other program spots.

For example, according to the another embodiment, in S1405, the control section 201 may further specify a program spot that belongs to a zone that is indicated by order conditions of an advertisement campaign of a client from program spots whose rating points are the second predicted rating point and have increased compared to the estimated rating point while satisfying the given increase condition. Furthermore, the control section 201 may determine a display format of the specified program spot such that the specified program spot is displayed in the display format different from those of the other program spots. Alternatively, the control section 201 may specify a program spot that satisfies at least one of conditions such as the A unit price, the AG share, the containing ratio, the weekly balance and stacking of the order conditions from safe program spots whose rating points are the second predicted rating point and do not decrease from the estimated rating point. Furthermore, the control section 201 may determine a display format of this specified program spot such that the specified program spot is displayed in the display format different from those of the other program spots. Furthermore, the control section 201 may determine the display format such that the display format includes information that indicates that program spots sold only for time CMs cannot be selected.

In addition, in the above operation flow in Fig. 14, according to the processing in, for example, S1405, S1408 and S1410, the control section 201 of the plan revision server 121 operates as, for example, the output section 211. Furthermore, according to the processing in S1404, the control section 201 of the plan revision server 121 operates as, for example, the comparison section 212. According to the processing in S1411, the control section 201 of the plan revision server 121 operates as, for example, the notification section 213. According to the processing in S1412, the control section 201 of the plan revision server 121 operates as, for example, the saving section 214. According to the processing in, for example, S1406, S1407 and S1409, the control section 201 of the plan revision server 121 operates as, for example, the indication section 215.

Although the embodiment has been described above, the embodiment is not limited to this. For example, the above-described operation flow is exemplary, and the embodiment is not limited to this. If possible, the operation flow may be executed by changing a processing order, or may further include additional processing, or part of processing may be omitted. For example, the processing in S1406 and S1407 in Fig. 14 may be executed by switching the processing order.

Furthermore, although the above embodiment has described television CMs as an example, the embodiment is not limited to this. For example, the embodiment may be applied to simultaneous distribution that distributes content via the Internet. Furthermore, the embodiment may be applied to CMs for other content such as radio CMs. One of ordinary skilled in the art can apply the embodiment to various types of content by differently reading the description of the above-described embodiment as needed. In a case where, for example, the embodiment is applied to radio CMs, The word "view" in the above-described embodiment may be read as "listen".

Furthermore, the control section 201 of the plan revision server 121 may include a function of outputting various display screens that include the program guides illustrated in above-described Figs. 7, 8, 9, 12, 13 and 15 according to the embodiment in given file formats such as PDFs. The resulting output data may be used to, for example, share a plan revision study situation with the broadcast station 101 and the client 103.

Furthermore, although the above-described embodiment has described the example where the display screen that assists plan revision is presented based on the predicted rating point, the embodiment is not limited to this. For example, according to the another embodiment, the control section 201 may execute processing of presenting a display screen that assists plan revision based on information other than a predicted rating point. In one example, the control section 201 may present a display screen that assists plan revision, based on attribute information or behavior information related to viewers of programs linked to program spots. In this regard, the attribute information may include, for example, demographic information such as sexes and ages of viewers, and information related to a hobby and a preference such as a preference for curry and a preference for soccer. Furthermore, the behavior information may include, for example, information related to behaviors of viewers such as information that indicates viewing time zones of programs and a product purchase tendency such as a purchase history. Furthermore, the control section 201 may present a display screen that assists plan revision based on information related to CMs to be broadcast. In one example, information of reaction rates of consumers for broadcast of CMs can be used. For example, it is assumed that a sale increase rate is higher in a case where a CM of a certain restaurant is broadcast in the morning than in a case where the CM is broadcast in the evening. In this case, it is found that the reaction rate of the consumers for the CM is higher in the case where the CM is broadcast in the morning than in the case where the CM is broadcast in the evening. Furthermore, the control section 201 may present a display screen that assists plan revision by using such information of the reaction rate of the consumers for a broadcast day or a broadcast time zone of a CM. Furthermore, the control section 201 may present a display screen that assists plan revision by combining these pieces of information and information of a predicted rating point.

Furthermore, according to the above-described embodiment, the various rating points including, for example, the ordered cumulative rating point, the estimated rating point, the predicted rating point and the actual rating point may be expressed as rating points such as the GRP, the ALL (P+C7) and the TRP. Furthermore, the rating point may be measured by, for example, a people meter or other methods. Furthermore, according to the above-described embodiment, broadcasting may include television terrestrial broadcasting, satellite or cable broadcasting, radio broadcasting, and broadcasting via the Internet or wireless communication.

Furthermore, although the above-described embodiment has described the example where the estimated rating point used at a time of estimate is used as the first predicted rating point, the first predicted rating point according to the embodiment is not limited to this. For example, it is assumed that there are not only the estimated rating point but also the predicted rating point that is predicted once, and the second predicted rating point whose prediction accuracy is higher than that of this predicted rating point can be obtained. In this case, the above-described embodiment may be used to study or determine a target program spot for which plan revision is performed by using these two predicted rating points.

Furthermore the processing executed by the plan revision server 121 according to the above-described embodiment may be implemented by using a plurality of apparatuses.

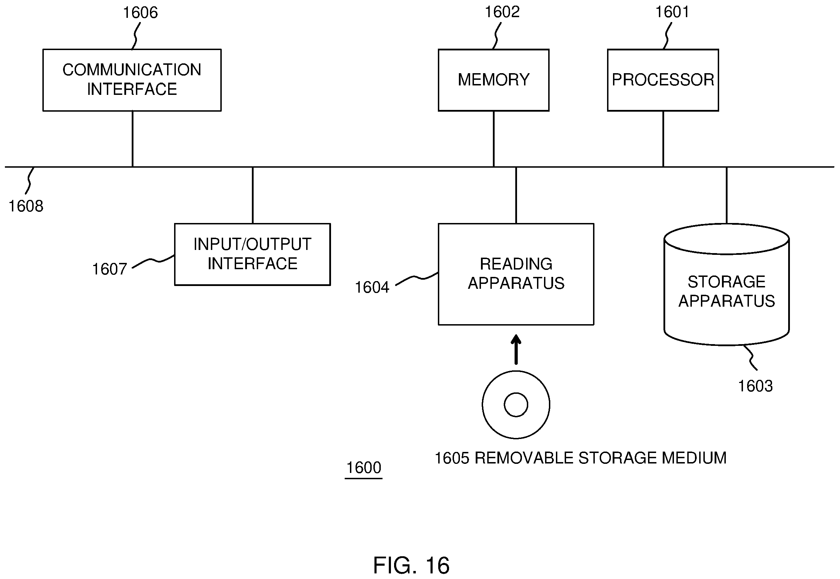

Fig. 16 is a diagram illustrating a hardware configuration of an information processing apparatus 1600 such as a computer that realizes the plan revision server 121 according to the embodiment. The hardware configuration in Fig. 16 includes, for example, a processor 1601, a memory 1602, a storage apparatus 1603, a reading apparatus 1604, a communication interface 1606 and an input/output interface 1607. In addition, the processor 1601, the memory 1602, the storage apparatus 1603, the reading apparatus 1604, the communication interface 1606 and the input/output interface 1607 may be connected with each other via, for example, a bus 1608.

The processor 1601 may be, for example, a single processor or may be a multiprocessor or a multicore. The processor 1601 provides part or all of functions of the above-described control section 201 by executing, for example, a program that describes a procedure of the above-described operation flow by using the memory 1602. For example, the processor 1601 operates as the output section 211, the comparison section 212, the notification section 213, the saving section 214 and the indication section 215 by reading and executing programs stored in the storage apparatus 1603.

The memory 1602 is, for example, a semiconductor memory, and may include a RAM area and a ROM area. The storage apparatus 1603 is, for example, a hard disk, a semiconductor memory such as a flash memory or an external storage apparatus. In this regard, the RAM is an abbreviation of a Random Access Memory. Furthermore, the ROM is an abbreviation of a Read Only Memory.

The reading apparatus 1604 accesses a removable storage medium 1605 according to an instruction of the processor 1601. The removable storage medium 1605 is realized by, for example, a semiconductor device (such as a USB memory), a medium (such as a magnetic disk) in which information is input and output by a magnetic action, or a medium (such as a CD-ROM, a DVD and a Blu-ray Disc (Blu-ray is the trademark)) in which information is input and output by an optical action. In this regard, the USB is an abbreviation of a Universal Serial Bus. The CD is an abbreviation of a Compact Disc. The DVD is an abbreviation of a Digital Versatile Disk.

The storage section 202 may include, for example, the memory 1602, the storage apparatus 1603 and the removable storage medium 1605. For example, information such as the program information 300, the advertisement request information 500, the broadcast schedule information 600 and the plan revision history information 1100 is stored in the storage apparatus 1603 of the plan revision server 121.

The communication interface 1606 transmits and receives data via the network according to an instruction of the processor 1601. The communication interface 1606 is an example of the above-described communication section 203. For example, the communication interface 1606 may communicate with the electronic data processing system 111 and the terminal 122 according to the instruction of the processor 1601.

The input/output interface 1607 may be, for example, an interface between an input apparatus and an output apparatus. The input apparatus is, for example, a device such as a keyboard or a mouse that accepts an instruction from a user. The output apparatus is, for example, a display device such as a display, and a sound apparatus such as a speaker.

Each program according to the embodiment is provided to the plan revision server 121 in, for example, following modes.
(1) Each program is installed in advance in the storage apparatus 1603.
(2) Each program is provided by the removable storage medium 1605.
(3) Each program is provided by a server such as a program server.

In addition, although the hardware configuration of the information processing apparatus 1600 for realizing the plan revision server 121 described with reference to Fig. 16 is exemplary, and the embodiment is not limited to this. For example, the part of the above-described components may be deleted, or new components may be added. Furthermore, according to the above embodiment, for example, part or all of functions of the above-described control section 201 may be implemented as hardware such as an FPGA and an SoC. In this regard, the FPGA is an abbreviation of a Field Programmable Gate Array. The SoC is an abbreviation of a System-on-a-chip.

The some embodiments have been described above. However, it should be understood that embodiments are not limited to the above embodiments, and include various modified embodiments and alternate embodiments of the above-described embodiments. For example, it is understood that the various embodiments can be embodied by modifying the components without departing from the gist and the spirit of the various embodiments. Furthermore, it is understood that the various embodiments can be carried out by combining a plurality of components disclosed in the above-described embodiments as appropriate. Furthermore, one of ordinary skilled in the art understands that the various embodiments can be carried out by deleting some components from all components described in the embodiments or adding some components to the components described in the embodiments.

### Reference Signs List

- 100: PLANNING SYSTEM
- 101: BROADCAST STATION
- 102: ADVERTISING AGENCY
- 103: CLIENT
- 111: ELECTRONIC DATA PROCESSING SYSTEM
- 121: PLAN REVISION SERVER
- 122: TERMINAL
- 123: DISPLAY APPARATUS
- 201: CONTROL SECTION
- 202: STORAGE SECTION
- 203: COMMUNICATION SECTION
- 211: OUTPUT SECTION
- 212: COMPARISON SECTION
- 213: NOTIFICATION SECTION
- 214: SAVING SECTION
- 215: INDICATION SECTION
- 300: PROGRAM INFORMATION
- 500: ADVERTISEMENT REQUEST INFORMATION
- 600: BROADCAST SCHEDULE INFORMATION
- 700, 800, 900, 1200, 1300, 1500: DISPLAY SCREEN
- 701, 702: DISPLAY FIELD
- 801: FIRST HATCHING PATTERN
- 802: SECOND HATCHING PATTERN
- 901: DELETION SPOT
- 902: ADDITION CANDIDATE SPOT
- 1100: PLAN REVISION HISTORY INFORMATION
- 1301, 1302: PROGRAM SPOT
- 1600: INFORMATION PROCESSING APPARATUS
- 1601: PROCESSOR
- 1602: MEMORY
- 1603: STORAGE APPARATUS
- 1604: READING APPARATUS
- 1605: REMOVABLE STORAGE MEDIUM
- 1606: COMMUNICATION INTERFACE
- 1607: INPUT/OUTPUT INTERFACE
- 1608: BUS

## Claims

1. An information processing apparatus comprising:
an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide; and
a comparison section that compares a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm,
wherein the output section outputs the display information to display a first program spot in a display format different from display formats of other program spots in the program guide, the first program spot having a rating point that is the second predicted rating point and has increased compared to the first predicted rating point while satisfying a given increase condition.

2. The information processing apparatus according to claim 1, wherein the output section outputs the display information to display the discrimination information of a broadcast spot in a display format different from display formats of discrimination information of other broadcast spots, the broadcast spot having a rating point that is the second predicted rating point and has decreased compared to the first predicted rating point while satisfying a given decrease condition among the broadcast spots.

3. The information processing apparatus according to claim 1 or 2, wherein the output section outputs the display information to vary a display format of the first program spot according to a degree of a rating point difference between the first predicted rating point and the second predicted rating point.

4. The information processing apparatus according to claim 2, wherein the output section outputs the display information to vary the display format of the broadcast spot according to a degree of a rating point difference between the first predicted rating point and the second predicted rating point, the broadcast spot having the rating point that is the second predicted rating point and has decreased compared to the first predicted rating point while satisfying the given decrease condition.

5. The information processing apparatus according to any one of claims 1 to 4, wherein
the first program spot is a program spot whose rating point is the second predicted rating point and has increased compared to the first predicted rating point while satisfying the given increase condition, and that belongs to a zone indicated by an order condition of the advertisement campaign of the client in the program guide, and
the zone is information that includes at least one of a reverse L type, an all-day type, an inverted E shape type, an inverted C shape type, a reverse F type, a midnight type and an all-day noon type, and indicates a time zone that is a commercial allocation target in the program guide.

6. The information processing apparatus according to any one of claims 1 to 4, further comprising:
a notification section that performs notification of a plan revision instruction that includes a deletion spot and an addition candidate spot, the deletion spot being indicated as a deletion target for canceling broadcast of the commercial from the broadcast spots for broadcasting the commercial associated with the advertisement campaign of the client, and the addition candidate spot being newly indicated as a broadcast spot candidate for broadcasting the commercial; and
a saving section that saves plan revision history information in a storage section, the plan revision history information associating information of the deletion spot and the addition candidate spot indicated by the plan revision instruction with the client.

7. The information processing apparatus according to claim 6, further comprising an indication section that indicates as the deletion spot a broadcast spot whose rating point is the second predicted rating point and has decreased compared to the first predicted rating point while satisfying a second decrease condition.

8. The information processing apparatus according to claim 6, wherein
the deletion spot and the addition candidate spot indicated by the plan revision instruction of a past advertisement campaign of the client are associated with the client, and registered in the plan revision history information, and
the information processing apparatus further comprises an indication section that indicates a second program spot as the deletion spot when the second program spot in the program guide is the broadcast spot for broadcasting the commercial, the second program spot being associated with a program position that is highly frequently indicated as the deletion spot while satisfying a given condition in the plan revision history information.

9. The information processing apparatus according to claim 6, wherein
the deletion spot and the addition candidate spot indicated by the plan revision instruction of a past advertisement campaign of the client are associated with the client, and registered in the plan revision history information, and
the information processing apparatus further comprises an indication section that indicates a second program spot as the additional candidate spot when the second program spot in the program guide is not the broadcast spot for broadcasting the commercial, the second program being associated with a program position that is highly frequently indicated as the addition candidate spot while satisfying a given condition in the plan revision history information.

10. The information processing apparatus according to claim 9, wherein
the revision plan history information further includes plan revision success/failure information that is associated with the addition candidate spot, and indicates whether or not the plan revision instruction of the addition candidate frame has succeeded, and
the indication section specifies a success rate of the plan revision instruction of the addition candidate spot to the program spot at the program position based on the plan revision success/failure information, and, when the success rate of the plan revision instruction is a given threshold or less, cancels the indication of the second program spot to the addition candidate frame.

11. The information processing apparatus according to claim 6, wherein
the saving section further saves the information of the deletion spot and the addition candidate spot indicated by the plan revision instruction in association with information of a target layer indicated by an order condition of the advertisement campaign of the client in the plan revision history information, and
the target layer is information that indicates a target of a commercial including categories of a sex and an age in a marketing field.

12. A plan revision assist method executed by an information processing apparatus comprising:
an output step of outputting display information for displaying discrimination information in association with a broadcast spot in a program guide, the discrimination information discriminating the broadcast spot for broadcasting a commercial associated with an advertisement campaign of a client among a plurality of program spots included in the program guide; and
a comparison step of comparing a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm,
wherein the output step outputs the display information to display a first program spot in a display format different from display formats of other program spots in the program guide, the first program spot having a rating point that is the second predicted rating point and has increased compared to the first predicted rating point while satisfying a given increase condition.

13. A plan revision assist program causing a computer to execute:
output processing of outputting display information for displaying discrimination information in association with a broadcast spot in a program guide, the discrimination information discriminating the broadcast spot for broadcasting a commercial associated with an advertisement campaign of a client among a plurality of program spots included in the program guide; and
comparison processing of comparing a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm,
wherein the output processing outputs the display information to display a first program spot in a display format different from display formats of other program spots in the program guide, the first program spot having a rating point that is the second predicted rating point and has increased compared to the first predicted rating point while satisfying a given increase condition.

14. An information processing apparatus comprising:
an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide; and
a comparison section that compares a first predicted rating point and a second predicted rating point, the first predicted rating point being predicted by using first data for each program spot of the plurality of program spots included in the program guide, and the second predicted rating point being predicted by using second data collected after the first data,
wherein the output section outputs the display information to display a first program spot in a display format different from display formats of other program spots in the program guide, the first program spot having a rating point that is the second predicted rating point and has increased compared to the first predicted rating point while satisfying a given increase condition.

## Amended claims

### Amended claims under Art. 19.1 PCT

1. An information processing apparatus comprising:
an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide; and
a comparison section that compares a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm,
wherein the output section outputs the display information to display a first program spot in a display format different from display formats of other program spots in the program guide, the first program spot having a rating point that is the second predicted rating point and has increased compared to the first predicted rating point while satisfying a given increase condition.

2. The information processing apparatus according to claim 1, wherein the output section outputs the display information to display the discrimination information of a broadcast spot in a display format different from display formats of discrimination information of other broadcast spots, the broadcast spot having a rating point that is the second predicted rating point and has decreased compared to the first predicted rating point while satisfying a given decrease condition among the broadcast spots.

3. The information processing apparatus according to claim 1 or 2, wherein the output section outputs the display information to vary a display format of the first program spot according to a degree of a rating point difference between the first predicted rating point and the second predicted rating point.

4. The information processing apparatus according to claim 2, wherein the output section outputs the display information to vary the display format of the broadcast spot according to a degree of a rating point difference between the first predicted rating point and the second predicted rating point, the broadcast spot having the rating point that is the second predicted rating point and has decreased compared to the first predicted rating point while satisfying the given decrease condition.

5. The information processing apparatus according to any one of claims 1 to 4, wherein
the first program spot is a program spot whose rating point is the second predicted rating point and has increased compared to the first predicted rating point while satisfying the given increase condition, and that belongs to a zone indicated by an order condition of the advertisement campaign of the client in the program guide, and
the zone is information that includes at least one of a reverse L type, an all-day type, an inverted E shape type, an inverted C shape type, a reverse F type, a midnight type and an all-day noon type, and indicates a time zone that is a commercial allocation target in the program guide.

6. The information processing apparatus according to any one of claims 1 to 4, further comprising:
a notification section that performs notification of a plan revision instruction that includes a deletion spot and an addition candidate spot, the deletion spot being indicated as a deletion target for canceling broadcast of the commercial from the broadcast spots for broadcasting the commercial associated with the advertisement campaign of the client, and the addition candidate spot being newly indicated as a broadcast spot candidate for broadcasting the commercial; and
a saving section that saves plan revision history information in a storage section, the plan revision history information associating information of the deletion spot and the addition candidate spot indicated by the plan revision instruction with the client.

7. The information processing apparatus according to claim 6, further comprising an indication section that indicates as the deletion spot a broadcast spot whose rating point is the second predicted rating point and has decreased compared to the first predicted rating point while satisfying a second decrease condition.

8. The information processing apparatus according to claim 6, wherein
the deletion spot and the addition candidate spot indicated by the plan revision instruction of a past advertisement campaign of the client are associated with the client, and registered in the plan revision history information, and
the information processing apparatus further comprises an indication section that indicates a second program spot as the deletion spot when the second program spot in the program guide is the broadcast spot for broadcasting the commercial, the second program spot being associated with a program position that is highly frequently indicated as the deletion spot while satisfying a given condition in the plan revision history information.

9. The information processing apparatus according to claim 6, wherein
the deletion spot and the addition candidate spot indicated by the plan revision instruction of a past advertisement campaign of the client are associated with the client, and registered in the plan revision history information, and
the information processing apparatus further comprises an indication section that indicates a second program spot as the additional candidate spot when the second program spot in the program guide is not the broadcast spot for broadcasting the commercial, the second program being associated with a program position that is highly frequently indicated as the addition candidate spot while satisfying a given condition in the plan revision history information.

10. The information processing apparatus according to claim 9, wherein
the revision plan history information further includes plan revision success/failure information that is associated with the addition candidate spot, and indicates whether or not the plan revision instruction of the addition candidate frame has succeeded, and
the indication section specifies a success rate of the plan revision instruction of the addition candidate spot to the program spot at the program position based on the plan revision success/failure information, and, when the success rate of the plan revision instruction is a given threshold or less, cancels the indication of the second program spot to the addition candidate frame.

11. The information processing apparatus according to claim 6, wherein
the saving section further saves the information of the deletion spot and the addition candidate spot indicated by the plan revision instruction in association with information of a target layer indicated by an order condition of the advertisement campaign of the client in the plan revision history information, and
the target layer is information that indicates a target of a commercial including categories of a sex and an age in a marketing field.

12. A plan revision assist method executed by an information processing apparatus comprising:
an output step of outputting display information for displaying discrimination information in association with a broadcast spot in a program guide, the discrimination information discriminating the broadcast spot for broadcasting a commercial associated with an advertisement campaign of a client among a plurality of program spots included in the program guide; and
a comparison step of comparing a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm,
wherein the output step outputs the display information to display a first program spot in a display format different from display formats of other program spots in the program guide, the first program spot having a rating point that is the second predicted rating point and has increased compared to the first predicted rating point while satisfying a given increase condition.

13. A plan revision assist program causing a computer to execute:
output processing of outputting display information for displaying discrimination information in association with a broadcast spot in a program guide, the discrimination information discriminating the broadcast spot for broadcasting a commercial associated with an advertisement campaign of a client among a plurality of program spots included in the program guide; and
comparison processing of comparing a first predicted rating point and a second predicted rating point, the first predicted rating point being predicted by a first prediction algorithm for each program spot of the plurality of program spots included in the program guide, and the second predicted rating point being predicted by a second prediction algorithm whose prediction accuracy is higher than prediction accuracy of the first prediction algorithm,
wherein the output processing outputs the display information to display a first program spot in a display format different from display formats of other program spots in the program guide, the first program spot having a rating point that is the second predicted rating point and has increased compared to the first predicted rating point while satisfying a given increase condition.

14. An information processing apparatus comprising:
an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide; and
a comparison section that compares a first predicted rating point and a second predicted rating point, the first predicted rating point being predicted by using first data for each program spot of the plurality of program spots included in the program guide, and the second predicted rating point being predicted by using second data collected after the first data,
wherein the output section outputs the display information to display a first program spot in a display format different from display formats of other program spots in the program guide, the first program spot having a rating point that is the second predicted rating point and has increased compared to the first predicted rating point while satisfying a given increase condition.

15. (Added)
An information processing apparatus comprising an output section that outputs display information for displaying discrimination information in association with a broadcast spot in a program guide, the discrimination information discriminating the broadcast spot for broadcasting a commercial associated with an advertisement campaign of a client among a plurality of program spots included in the program guide,
wherein the output section outputs the display information to display a first predicted rating point of a certain program spot and a second predicted rating point of the certain program spot, the first predicted rating point being predicted by a first prediction algorithm for the certain program spot of the plurality of program spots included in the program guide, and the second predicted rating point being predicted by a second prediction algorithm whose prediction accuracy is higher than prediction accuracy of the first prediction algorithm.
